# EUROPEAN PATENT APPLICATION

(11) **EP 4 101 298 A1**
(43) Date of publication of application: **14.12.2022**
(21) Application number: 22178229.5
(22) Date of filing: 09.06.2022
(51) Int. Cl.: A21D 13/06, A21D 13/062, A21D 13/068, A21D 13/60, A21D 8/06

(54) **CONFECTIONERY PRODUCT**

(30) Priority: 09.06.2021 GB 202108252
(71) Applicant: Believe in Science Ltd, Winchester, Hampshire SO21 2AA (GB)
(72) Inventor: Fletcher, Anthony B, Winchester, SO21 2AA (GB); Kravvariti, Evangelia, Winchester, SO21 2AA (GB)
(74) Representative: Marks & Clerk LLP

(57) **Abstract**

A dough for a confectionery product and a method for making confectionery products. The dough comprises 50-70wt% dry ingredient mix, 25-35wt% water, 0-5wt% oil and 0-5wt% yeast. The dry ingredient mix comprises wheat flour having a protein content of 11-13%. The process comprises making the dough, partially cooking the dough to form a partially cooked intermediate and flash frying the partially cooked intermediate. The resulting confectionery product can be produced with lower levels of sugar, oil and/or calorific content without comprising consumer enjoyment.

## Description

### Field of Invention

The following invention relates to confectionery products and a method of manufacture. Specifically, the invention relates to confectionery products with a reduced content of one or more of sugar, fat, or calories.

### Background

Doughnuts are a common and popular form of confectionery found in many countries. Broadly speaking, doughnuts fall into one of two categories: cake doughnuts and yeast doughnuts. Cake and yeast doughnuts share many ingredients, and are mostly distinguished by the leavening agent used within the recipe. Yeast doughnuts use yeast within the dough, which is proofed in order to produce a light and fluffy texture in the final product. In contrast, cake doughnuts are batter based rather than dough based, and use a chemical leavener such as baking powder. Often, cake doughnuts are produced using a lower protein flour in the region of 7 to 8% protein, compared to the higher protein flours (9 to 12%) used for yeast doughnuts.

Doughnuts are typically created by the combination of flour, leavening agent, sugar, eggs, fats and additional components. The flour and eggs are usually critical in forming the final structure of the product although vegan alternatives to eggs could also be used. Varying ratios of the components are selected in order to provide desirable characteristics and flavours in the final product. For example, higher protein flours aid in the development of the gluten structure, or the addition of shortening may be used to interrupt the gluten matrix and impart a softer texture.

Both cake and yeast doughnuts are deep fried, resulting in a high fat content in the final product. Doughnuts are often either filled or glazed, and along with the sugar used within the dough/batter itself, lead to a high sugar content. Doughnuts are relatively high in calories, with a conventional doughnut having in the region of 400 kcal per 100g.

There have been multiple attempts to make healthier doughnuts, for example by reducing the sugar, fat and/or calorie content. However, all existing attempts have produced a significantly inferior texture and taste of the final product. One method to reduce the calorie content of confectionery products is to increase the water content. Within baking however, this is known to have a negative impact on the product's ability to rise and increases the stickiness of the dough, making it very difficult to handle efficiently.

The present invention attempts to provide a healthier confectionery product which does not suffer from the problems of the prior art.

### Summary of invention

According to a first aspect of the invention, there is provided a dough for a confectionery product comprising: 50-70 wt% dry ingredient mix; 25-35 wt% water; 0-5 wt% oil; and 0-5 wt% yeast; wherein the dry ingredient mix comprises wheat flour having a protein content of 11-13%.

The dry ingredient mix may further comprise up to 1 wt% of vital wheat gluten. Optionally, the dry ingredient mix may comprise 0.25 wt% to 0.75 wt%, 0.3 wt% to 0.7 wt%, 0.4 wt% to 0.6 wt%, 0.45 to 0.55 wt%, or approximately 0.5 wt% of vital wheat gluten.

The dry ingredient mix may further comprise up to 5 wt% of an alternative starch source. Optionally, the dry ingredient mix may comprise 3.5 to 4.5 wt% of an alternative starch source. The alternative starch source may be selected for it swelling properties.

The alternative starch source may comprise a non-wheat flour or starch, and/or a non-grain flour or starch. The alternative starch source may comprise a high-starch flour. The alternative starch source may comprise one or more of potato flour, potato flakes, potato starch, soya flour, tapioca starch, potato starch, wheat starch, maize starch, waxy maize starch, and tapioca starch. The alternative starch source may be pre-gelatinised. The alternative starch source may comprise potato flakes and soya flour. In some embodiments, potato flakes and soya flour may be used in a ratio of 5:1, 4:1, 3:1, 2:1 or 1:1.

The dry ingredient mix may comprise 1 wt% to 5 wt%, or 2 wt% to 4 wt%, 2.5 wt% to 3.5 wt%, or approximately 3 wt% of potato flour, potato flakes, and/or potato starch. The dry ingredient mix may comprise 1 wt% to 5 wt%, or 2 wt% to 4 wt%, or 0.1 wt % to 2 wt%, 0.5 wt% to 1.5 wt% or approximately 1.2 wt% of soya flour.

The dough may further comprising up to 3 wt% of a chemical leavening agent. The chemical leavening agent may comprise one or more of baking powder, bicarbonate of soda, potassium bicarbonate, monocalcium phosphate, and SAPP 28. The dough may comprise 0 - 3 wt%, 0 - 2 wt%, 0.5 - 1.5 wt%, 0.6 - 1.4 wt%, or 0.9 - 1.3 wt% of a chemical leavening agent. The dough may comprise 0.6 - 0.7 wt% of SAPP 28 and 0.4 - 0.5 wt% of sodium bicarbonate.

The dough may further comprise up to 5 wt% of emulsifier. The dough may comprise 0.5 - 4.5 wt%, 1 - 4 wt%, 1 - 3 wt%, 1 - 2 wt%, 1.25 - 1.75 wt%, or 1.6 - 1.7 wt% of emulsifier. The emulsifier may comprise a fat-based emulsifier. The emulsifier may comprise one or more of: DATEM, SSL, mono- and diglycerides of fatty acids, glycerol monostearate, CITREM (citric acid ester of mono- and diglycerides), LACTEM (lactic acid esters of mono and diglycerides), and lecithin. The dough may comprise up to 0.1 wt% of DATEM. The dough may comprise 0.4 - 0.5 wt% of SSL. The dough may comprise 1.0-1.2 wt% of mono- and diglycerides of fatty acids.

The dough may further comprise up to 1 wt% of an enzyme mix. The dough may comprise 0.25 - 0.75 wt%, 0.4 - 0.7 wt%, or 0.5 - 0.6 wt% of an enzyme mix. The enzyme mix may comprise one or both of: amylase and lipase. The amylase may comprise alpha-amylase.

The dough may further comprise up to 2 wt% of a film-forming ingredient. The dough may comprise up to 0.1 - 1.5 wt%, 0.25 -1 wt%, 0.4 to 0.7 wt%, or 0.5 to 0.6 wt% of a film-forming ingredient. The film-forming ingredient may comprise one or more of methyl cellulose, carboxymethyl cellulose, and hydroxypropyl methylcellulose.

The dough may comprising up to 30 wt% of a dough from a previous batch. The dough may comprise at least 5 - 28 wt%, 10 - 26 wt%, 15 - 25 wt%, 18 - 22 wt%, or approximately 20 wt% of a dough from a previous batch.

According to a second aspect of the invention, there is provided a confectionery product comprising a dough as described herein. The confectionery product may comprise cooked dough as described herein.

According to a third aspect of the invention, there is provided a method for making a confectionery product. The method may comprise making a dough as described herein. The method may comprise forming the dough into a desired shape. The method may comprise partially cooking the dough to form a partially cooked intermediate. The method may comprise flash-frying the partially cooked intermediate to produce the confectionery product.

Forming the dough into a desired shape may comprise forming balls or rings of dough, for example, via one or more of extrusion, deposition, manual working or cutting and rolling the dough. Forming the dough may comprise proofing the dough e.g. prior to partially cooking the dough. The dough may be proofed for 10-50, 20-40, 25-35, or approximately 30 minutes. The dough may be proofed at 30-45, 35-40, 36-39, 37-38, or at 37.5°C. The dough may be proofed at 50-80%, 60-70%, or approximately 65% humidity (relative humidity).

In some embodiments, the dough may be shaped via a cutting and/or stamping process e.g. by rolling out a sheet of dough and cutting and/or stamping the desired shape therefrom.

Without wishing to be bound by theory, it is believed that the forming step is important to the final properties of the confectionery product. It is believed that the forming process affects the surface structure of the dough, with processes such as stamping imparting higher strain on the surface and thus an increased permeability of the outer surface of the dough. In order to reduce the oil uptake during flash-frying of the intermediate product, it is desirable to encourage the formation of an impermeable (or lower permeability) skin on the intermediate product e.g. through extrusion or rolling of the dough into the desired shapes. In applications where a higher oil uptake is desirable, then a stamping process may be utilised to increase the permeability of the partially cooked intermediate.

Partially cooking the dough may comprise cooking the dough using a dry heat (e.g. via convection, conduction, or radiation), using a wet heat (e.g. steaming or boiling) or combinations thereof. Partially cooking the dough may comprise baking, grilling, and/or steaming the dough. Preferably, partially cooking the dough does not include frying. In the present context, dry heat means with a low humidity for example baking in an oven at 0%, less than 1%, less than 2%, less than 5%, or less than 10% humidity. It will be understood that the evaporation of water from the dough during cooking may cause slight fluctuations or increases in humidity in an oven, and thus the references to humidity are an initial level. In the present context, a wet heat means with at least a humidity of 20-100%. All references to humidity refer to relative humidity. Without wishing to be bound by theory, it is believed that application of a dry heat encourages the action of the leavening agents, and promotes a desirable, low-permeability surface or skin being formed on the dough e.g. to retain gases within the product and/or to repel or retard oil uptake during subsequent frying. However, application of dry heats also leads to cracking of the surface, which mitigates the desirable surface barrier properties. Similarly, steam cooking the dough is desirable for the rapid heat transfer for cooking the product and retaining moisture within the confectionery product, as well as avoiding surface cracking. However, wet heating can slow or prevent the desirable browning and surface formation on the intermediate product.

In one series of embodiments, the dough may be baked at an initial relative humidity of 0-10%, 1-10%, 0-5%, 1-5%, 0-1% or 0%. The dough may be partially cooked at 60-120°C, 65-115°C, 70-110°C, 75-105°C, 80-100°C, 85-95°C or at approximately 90°C, or within any combined range thereof. The dough may be partially cooked for 30s to 7mins, 1-6mins, 2-5mins, or 3-4 mins.

In some embodiments, the dough is cooked in steam at a relative humidity of 20-100%. In some embodiments, the dough is cooked in steam at a relative humidity of 30-90%, 40-80%, 50-70%, at 60%, or at any combination thereof. The dough may be cooked at 100-180°C, 100-150°C, 110-130°C, or at 120°C. In some embodiments, the dough is cooked in steam at 125-165°C, 140-160 °C, or approximately 150°C. The dough may be partially cooked for 30s to 7mins, 1-6mins, 2-5mins, or 3-4 mins.

In one series of embodiments, partially cooking the dough may comprise cooking the dough in steam at 100 to 175 °C and 100% humidity for up to 10 minutes.

The dough may be cooked at 125-165 °C, 140-160 °C, or approximately 150°C. The dough may be cooked for 4-10, 5-9, 6-8, or approximately 7 minutes.

In some embodiments, partially cooking the dough may comprise applying a dry heat for a first period of time, and subsequently applying a wet heat for a second period of time. In some alternative embodiments, the process may comprise applying a wet heat first, followed by a dry heat. In some further embodiments, the relative humidity may be increased and/or decreased throughout the partial cooking process e.g. by injecting steam part way through a baking step. In some embodiments, the humidity in the cooking conditions may be changed multiple times to produce a cooking profile.

In one series of embodiments, the dough is partially cooked in a dry heat at less than 10% relative humidity e.g. at 80-100°C and for 1 to 5 minutes. The dough may then be partially cooked in a wet heat at 20% relative humidity e.g. at 100-130°C for 1 to 5 minutes. The dough may then be partially cooked in a wet heat at 100% humidity e.g. at 100-130°C for 1 to 5 minutes. It would be understood that the cooking profile can be selected by the user from the above ranges discussed in a wide variety of configurations depending on the intended product properties and the specific dough used.

Without wishing to be bound by theory, it is understood that the partial cooking process can be modified to control of the surface properties of the intermediate product. For example, as noted previously, in order to further reduce the oil uptake during a frying step, it is desirable to form a relatively impermeable skin on the intermediate product. In some embodiments, the dough is partially cooked in conditions and for a period of time to develop a suitably impermeable surface on the intermediate product. For example, steam cooking the dough above 100°C can lead to desirable surface dehydration of the dough and generation of a suitable surface from the starches, proteins and film-forming ingredients which reduces oil uptake of the intermediate product during frying.

The dough may partially cooked until the centre of the product reaches at least 80°C. Optionally, the dough may be partially cooked until the centre of the product reaches at least 82°C, 84°C, 85°C, 86°C, 87°C, 90°C, 92°C, 95°C or higher. It is believed that at approximately 87°C the starch within the dough gelatinises and solidifies the structure of the product. Higher temperatures may be used to ensure full gelatinisation of the starches within the dough when cooked.

Flash-frying the intermediate product may comprise frying at 160-200°C for up to 40 seconds. For example, flash-frying the intermediate product may comprise frying at 170-195 °C, 180-190 °C, or approximately 185 °C. The intermediate product may be flash fried for up to 35, 30, 25, 20, 15 or 10 seconds.

In one series of embodiments, the intermediate product is flash-fried on one side only. For example, the intermediate product may be fried for 5-25s, or 10-20s or for 15s on a single side. Conventional doughs for confectionery products are typically buoyant in oil, and thus would typically be flipped during cooking to ensure even cooking of the product surface. In some embodiments, the confectionery product may be decorated e.g. iced or glazed. The decoration may be configured to obscure the un-fried side of the product e.g. to give the appearance of a fully fried confectionery product..

The intermediate product may be fried on a first side for up to 15 seconds, flipped, and subsequently fried for up to a further 15 seconds. Optionally, the intermediate product may be fried for up to 10 seconds per side.

Without wishing to be bound by theory, it is believed that the flash frying step can lead to a desirable taste profile and improved appearance, without being necessary for fully cooking the confectionery product, thanks to the partial cooking step carried out prior. The flash frying step can thus be used for cosmetic reasons.

The method may further comprise adding fermented and/or proofed dough from a previous batch into the dough mixture.

### Specific Description

The present invention is for an improved confectionery product which has a lower sugar and/or fat content. The product will be described herein with reference to doughnuts, although it would be appreciated that the invention is not restricted to doughnuts and applies to a range of confectionery products.

### Gluten Development

Flour is the main component of many bakery confectionery products. To achieve the desired softness in the present final product, the dough must have the correct gluten structure for expansion by the leavening agents and for the chosen cooking process. Conventionally, it is understood that most gluten structures can be springy and chewy and more reminiscent of breads, but that this is undesirable in the final confectionery product and is unenjoyable for consumers. An undeveloped gluten structure would result in a crumbly brittle texture, similar to a sponge cake or to pastry, or a lack of structure altogether, both of which are undesirable in the present confectionery product. It is important that the final doughnut have a soft, pliable, or "cotton wool" texture.

As is well known in the art, sugar and fat are typically used in baking to achieve a desirable softness. For example, shortening is a solid fat at room temperature commonly derived from vegetable oils. Shortening and many fats coat the gluten within the dough and makes the dough behave as if formed from tender, short fibres. Sugar, once dissolved within the dough, interferes with the gluten formation both through its hygroscopic nature (thus depriving the gluten of water) but also through binding with the gluten structure. Consequently, products with a lower sugar and/or fat content are more sensitive to undesirable changes in the toughness and hardness of the product. The present inventors have surprisingly found that by careful selection of the flour ingredients, the gluten structure can accommodate a reduced sugar and fat content.

The inventors have found that a desirable texture and structure can be achieved by using a mix of flours. The flour mix preferably comprises a wheat flour, and preferably, bakers flour. In some embodiments, the flour mix comprises a wheat flour with a protein content of 11-13% as the main component.

Various alternative flours may be added to the flour mix in order to add unique starches and/or proteins not found in wheat flour and thereby affect the properties of the dough and final confectionery product.

The mix of flours may include vital wheat gluten in order to increase the protein content of the flour and the final product. Since vital wheat gluten has had the starch removed from the flour, it is able to increase the protein content without affecting the starch content. It has been found that the addition of vital wheat gluten helps the dough to rise despite an increased water content.

The inventors have found that adding alternative starch flour(s) improves the softness and increases the water content of the product. Increasing the water content increases the weight of the final product and allows for the reduced sugar, fat and calorie content of the product. Conventionally, this is problematic since excess water changes the rheology of the dough. Typically, this results in a far more sticky dough which is harder to handle. The increased water also disrupts the ability for the dough to rise. The starches may be selected on the basis of their water holding properties. The starches thus increase the softness and moistness of the final product once cooked.

The inventors have found that adding an alternative starch source, such as alternative flours, and in particular potato and/or soya flour, flakes and/or starch, improves the final product. A mixture of alternative starch sources can be used in order to avoid imparting a specific flavour or texture to the product. For example, high levels (e.g. above 5 wt%) of potato flakes are used, the product can sometimes have a potato flavour and/or a gluey texture.

Without wishing to be bound by theory, it is believed that the predominance of branching amylopectin chains in these alternative starch sources allow a high degree of water uptake if added into a warm dough. This water is locked away within the structure of the product without increasing the stickiness of the dough, thereby allowing the dough to be handled effectively. It has been found that, surprisingly, the increased water is not detectable by the consumer.

The inventors have also found that the dough and the resulting products can be further improved by incorporating a portion of the dough from an earlier batch which has undergone a fermentation/proofing step. Without wishing to be bound by theory, it is understood that such a 'scrap dough' contains a disrupted and broken gluten structure which imparts desirable characteristics to the dough. The inventors have found that up to 30% of the dough can be said 'scrap dough' i.e. derived from an earlier batch.

### Leavening Agents

Most doughnuts are raised either with yeast or with a chemical leavening agent. The different leavening agents provide differing hole sizes and structures in the cooked dough and require different textures and consistencies of the batters and doughs to function effectively.

The inventors have found that a combination of leavening agents, comprising yeast and a chemical leavening agent, is particularly effective. In particular, a combination of yeast, sodium acid pyrophosphate (SAPP 28) and bicarbonate of soda was particularly preferred. This was found to produce a variety of bubble sizes in the dough leading to both large and small cavities. This combination imparted an improved softness and lightness to the final product. In particular, the combination of SAPP 28 and bicarbonate of soda was found to provide a smooth release of CO₂ during proofing and resulted in a product with a soft 'doughy' texture, rather than a bread-like, elastic texture.

### Oil and fat control

It is understood that the vast majority of the fat within a cooked doughnut is absorbed during the frying process. In order to reduce the fat content, it is thus important to reduce the fat absorption during cooking of the dough.

The inventors have further found that the addition of a film-forming ingredient was particularly advantageous. In particular, methyl cellulose, and more specifically, hydroxypropyl methylcellulose (HPMC) may be used.

Without wishing to be bound by theory, it is understood that the film-forming ingredients form a partial or complete surface film on the dough during the cooking steps. This protects the dough during the frying process and reduces the uptake of the frying oil into the cooked product and reduces the water loss of the dough.

As described below, it has further been found that the swelling and gelatinisation of the starch within the dough during the steaming step further reduces the oil absorption during a subsequent flash-frying step. It has also been found that the surface dehydration of the dough during the steaming step reduces the oil absorption during a subsequent flash-frying step. Without wishing to be bound by theory, it is believed that this is due to both a reduce rate of oil uptake as well as a faster browning of the surface permitting reduced contact times with the oil.

### Emulsifiers

Fats are normally essential in doughnuts as they impart a moistness and tenderness to the product. Fats are enjoyable when consumed and in many cases provide specific flavour notes to the product. Reducing the fat content thus lessens the pleasurable aspects of these ingredients.

The inventors have found that the reduction in fat can be compensated for by incorporating emulsifiers into the dough. The emulsifiers ensure that the lower amount of fat in the original dough works in an optimum way by helping disperse the fats throughout the dough. Emulsifiers can also be used which complex directly with the starches or proteins within the flour mix. In particular, sodium stearoyl lactylate (SSL), DATEM (diacetyl tartaric acid ester of mono- and diglycerides), and mono- and digylcerides of fatty acids were found to give the desired soft fluffy texture required of a doughnut along with the use of a rapeseed oil.

### Enzymes

Enzymes can help in the formation of the correct gluten and starch structure. Enzymes selected include lipases and amylases. The lipases enhance the emulsifiers that are present within the starch, ensuring they bind to the starch in the optimum way and impart a soft and light texture to the confectionery product. The amylases affect the structure of the starch granules during the steaming process and i.e. during the starch gelatinisation process. This minimises the bridges between granules and creates a less firm texture and minimises the risk of forming a rubbery, gel-like substance when steaming.

These enzymes target the chemical bonds which form between amylopectin molecules in starch. The enzymes thus improve the product softness and also delay starch retrogradation. This is important because with a reduced sugar and fat content the products go stale more quickly.

### Further ingredients

The dough further comprises a number of conventional ingredients in order to provide the final product. For example, depending of the final structure and flavour desired by the manufacturer, the product may comprise one or more of: salt, milk powder (optionally skimmed milk powder), egg (optionally powdered), and a mix of sugars or sweeteners.

The sugars selected may include one or more of: sucrose, dextrose, glucose and glucose syrup, fructose, lactose, galactose and maltose, or any combination thereof. Dextrose is particularly desirable since it feeds the yeast in the dough more effectively, and results in an improved rise and final product texture, despite a reduced overall sugar content.

Dextrose has also been found to improve the surface colouration of the product during the cooking process. Despite tasting less sweet compared to sucrose, it was found to caramelise better during cooking at short frying times and thus a desirable surface caramelisation is achievable. This provides a suitable sweet taste to a consumer.

Other sugar substitutes have been shown to be effective for providing the necessary sweetness to the dough. Suitable sweeteners include sugar alcohols (e.g. erythritol, maltitol, sorbitol, xylitol, mannitol, lactitol, isomalt, mannitol or any combination thereof), intense sweeteners (e.g. stevia, aspartame, acesulfame-k, cyclamates, saccharin, sucralose, neohesperidin, dihydrochalone, alitame, stena sweeteners, glycyrrhizin or any combination thereof) and any combination of sugars, sugar alcohols and intense sweeteners. In a preferred series of embodiments, erythritol was used. In a preferred series of embodiments, stevia was used.

The product may also comprise a flavouring, such as a spice or herb, natural or artificial flavourings etc. Vanilla and maltol flavourings were found to be particularly desirable, since it imparted a sweetness to the flavour of the product without leading to an increase in the sugar content.

All of the above ingredients, with the exception of the 'scrap dough', are available in dry powder or granules form. To form the dough, the dry components are mixed with water and a small quantity of oil and mixed until a homogenous dough is formed. Only a small quantity of oil is necessary, typically less than 5%. The weight of the water added can be as high as 60% of the weight of the dry ingredients (i.e. 5 parts dry mix to three parts water).

### Method

### Mixing

The dough can be made in the conventional manner according to the ratios described herein. The dry compounds are first combined according to the desired recipe. To the dry mix is then added oil, dry yeast, water and the 'scrap dough' as described above. The complete mixture is then mixed together to form a dough.

The mixing can be achieved by hand. Preferably, however, the mixing is carried out in a conventional electric mixer. Preferably, this is carried out at a first speed, and subsequently, the speed is increased to a second speed and the mixing continued. The dough may be mixed at a first speed for 1 to 3 minutes, and at an increased speed for 3 to 7 minutes. Preferably the dough is mixed at a low speed for 2 minutes and at a medium speed for 4 to 6, and further preferably 5, minutes. The first speed may be between 90 and 130 rpm. The second speed may be between 200 and 240 rpm. The increase in mixing speed is believed to assist in the formation of the gluten structure.

In confectionery products, it is common wisdom to avoid over-mixing the dough in order to avoid the gluten network from becoming over-developed and leading to a tough, bread-like product. As described above, in traditional confectionery products where a gluten network is required, this is conventionally moderated by the use of sugar and fat to soften the product and inhibit the gluten formation. Surprisingly, the present inventors have found that by ensuring the gluten network is correctly formed, and by careful selection of the additional ingredients, a desirable product can be achieved while using reduced amounts of sugar and fat. This is believed to be in part due to the use of high performance emulsifiers which ensure the remaining fat is used effectively throughout the product and which can bind to the gluten structure itself, and the selection of collapsible starches improving the softness of the product.

A correct gluten structure in the mixed dough can be assessed by a series of visual tests. Firstly, the completed dough develops a smooth appearance once fully mixed. The dough will no longer stick to the mixer and will pull away easily, which indicates the liquid ingredients (primarily water) have been absorbed by the constituents. Further, the colour of the dough should lighten when the dough is correctly formed. If these characteristics are not observed, then further mixing is required to improve the gluten development. Secondly, the dough will form a translucent membrane when subjected to a 'gluten window test'. The test requires a user to manually and gently stretch out a small ball of dough to form a thin, translucent membrane, which is a preliminary indicator of gluten structure formation.

Lastly, when pulled, the dough should extend for 5 to 10cm prior to tearing. An under-developed gluten structure will lead to a stretchy chewing gum-like texture, and thus if the dough stretches beyond the above range, this is an indicator that the gluten structure is under-developed and requires further mixing of the dough.

The dough can then be shaped into the desired product shape, optionally rested and then proofed to allow the dough to rise. Resting requires leaving the dough for a period of time to allow the gluten to relax in its shape. Resting may be performed for up to 10 minutes, for example, approximately 5 minutes. Proofing the dough comprises gently warming the dough in suitable conditions to allow the leavening agents to function. Preferably, proofing is carried out at 37 to 38 (e.g. at 37.5°C) and at 65% humidity. The proofing step is carried out for approximately 30 minutes.

The SAPP 28 leavening agent releases an acid which reacts with the sodium bicarbonate to release CO₂ into the dough. The SAPP 28 has a smooth release over a range of temperatures, and thus the proofing conditions are carefully controlled to give a desirable CO₂ release from the chemical leavening agents. This effect is also observed at the higher cooking temperatures used later on, and provides the desirable crumb texture in the product as a result of the small bubbles of CO₂ being released. The yeast is also active during proofing, consuming the sucrose and dextrose within the dough and releasing CO₂ into the dough to perform the majority of the rise and dough expansion. The combination of leavening agents and the proofing conditions have been found to be particularly effective on providing a suitable rise to the dough and forming a light and soft product once cooked.

### Steaming

Conventionally, doughnuts are deep fat fried at temperatures in excess of 170°C. This leads to mass transfer (i.e. the loss of water from the dough) as well as fat ingress into the product. The rapid heating of the dough leads to expansion as well as starch gelatinization and the distinctive browning, aroma and taste. Baking in an oven is a common alternative process, either with or without various oil applications. However, the slower heat transfer from the air to the dough when baking often dehydrates the surface of the dough due to taking longer for the centre to reach the required temperature. This results in a "bready" or "stale" flavour which is off-putting to consumers, especially when sugar and fat levels have been reduced as noted above.

The inventors have found that the negative flavour of baking processes can be avoided by steaming the product. Preferably, the product is steamed for 6 to 8 minutes, depending on its size. The product may be steamed till the centre reaches a desired temperature e.g. up to 100°C, or 80 to 95°C, 85 to 90°C, 86 to 88°C and preferably, 87°C. At this temperature, the starch within the dough would gelatinise without the dough dehydrating and triggering localised areas of starch retrogradation. It is understood that the starch gelatinisation occurs at 87°C, and thus higher internal temperatures may be reached in order to ensure complete gelatinisation of the starches.

The temperature of the steam oven can be selected to achieve the desired product texture. At lower temperatures (e.g. approximately 90°C) and 100% humidity, the starch within the dough gelatinises throughout but the dough has a wet texture. At higher temperatures above 100°C, the surface of the product begins to dehydrate. If steamed at too high a temperature, e.g. 200°C, the product forms a bread-like crust. The inventors have found that temperatures in the range 130-170°C, and further preferably 140-160°C are particularly effective. It is understood that the temperatures selected during the steaming step reflect the overall temperature within the steam oven, and are typically an average temperature, rather than referring specifically to the temperature of the steam applied therein to increase the humidity. E.g. the steam supplied to the steam oven may have a temperature over 100°C, with additional heat supplied by the oven to bring the overall oven temperature to the desired temperature, which may be below 100°C.

Importantly, the inventors have identified that if standard dough compositions are steamed and flash fried they will produce soggy or tough textures. Instead, the inventors have found that the dough composition can be designed to give a doughnut like texture under these cooking conditions through the above described selection of, for example, proteins, starches, emulsifiers, and enzymes.

### Frying

All conventional doughnuts are deep fried - typically for 30-60 seconds per side, depending on the size of the product and temperature of the fryer. In conventional doughnuts, this frying stage is where the majority of the fat content in the final product comes from.

The inventors have also found that once the starch has been gelatinized the product can be flash fried. During the steaming step, the structure of the product has been "closed" by the swelling and expansion of the starch grains. Consequently, the product can be exposed to a deep fat fryer at 170-200°C without excessive oil penetrating into the product. Without wishing to be bound by theory, the gelatinisation of the starch during the steaming step causes the starch grains to push against each other in their swollen state forming a barrier to oil ingress. As noted above, this is further improved by the inclusion of a film-forming ingredient, such as HPMC, which further retards oil ingress. The steaming step also ensures the gluten/starch structure does not dry out through excess water loss or over cooking, which again can lead to tough bread-like texture in the mouth.

Preferably the frying step is carried out at 180-190°C for 5 to 15 seconds. At 175°C, the doughnut took around 30 seconds per side to cook, which lead to a high oil ingress. At higher temperatures, e.g. 185°C, the product could be browned on the surface to the correct degree within 10 seconds per side. Longer cooking times lead to a product which was overly browned and had a less pleasant flavour.

Since the starch has already been steam cooked the product only requires a brief exposure to the oil during a frying step to complete the cooking. For example, it has been found that 10 seconds for each side of the doughnut is sufficient. This reduced cooking time also leads to a reduction in fat content of the final confectionery product due to the minimised fat exposure.

The reduced frying time is sufficient to colour the product through the maillard reaction and to impart the desired taste and aroma notes to the surface. Crucially, this is achieved without saturating the doughnut with oil from an extended frying process on a dough where fat transfer can easily occur. This is assisted by the partial dehydration of the surface of the product during the steaming step.

### Experiments and Examples

### Experiment 1 - Dough formation

A series of doughnuts were prepared as follows. Dry mixes were prepared by mixing the dry ingredients according to the proportions in Tables 1 and 2. Example 1 is a comparative example showing a conventional doughnut recipe.

**Table 1**

| Ingredient | Ex. 1 | |
|---|---|---|
| | /g | % |
| Bakers white flour | 800 | 80.65 |
| Sugar | 90 | 9.07 |
| Shortening | 50 | 5.04 |
| Whole dried egg powder | 19 | 1.92 |
| Emulsifier | 12 | 1.21 |
| Salt | 11 | 1.11 |
| Skimmed milk powder | 10 | 1.01 |

**Table 2**

| **Ingredient** | **Ex. 2a** | | **Ex. 2b** | | **Ex. 2c** | | **Ex. 3** | |
|---|---|---|---|---|---|---|---|---|
| | /g | % | /g | % | /g | % | /g | % |
| Bakers white flour | 800 | 81.22 | 800 | 78.13 | 800 | 78.66 | 800 | 77.75 |
| Sugar (non-dextrose) | 30 | 3.05 | 30 | 2.93 | 30 | 2.95 | 30 | 2.92 |
| Shortening | - | - | - | - | - | - | - | - |
| Whole dried egg powder | 19 | 1.93 | 19 | 1.86 | 19 | 1.87 | 19 | 1.85 |
| Monolux (emulsifier) | 12 | 1.22 | 12 | 1.17 | 12 | 1.18 | 12 | 1.17 |
| Salt | 11 | 1.12 | 11 | 1.07 | 11 | 1.08 | 11 | 1.07 |
| Skimmed milk powder | 10 | 1.02 | 10 | 0.98 | 10 | 0.98 | 10 | 0.97 |
| Soft flour | 30 | 3.05 | 30 | 2.93 | 30 | 2.95 | 30 | 2.92 |
| Dextrose | 30 | 3.05 | 30 | 2.93 | 30 | 2.95 | 30 | 2.92 |
| HPMC | 10 | 1.02 | 10 | 0.98 | 10 | 0.98 | 10 | 0.97 |
| SAPP 28 | 7 | 0.71 | 7 | 0.68 | - | - | 7 | 0.68 |
| Enzyme mix | 6 | 0.61 | 6 | 0.59 | 6 | 0.59 | 6 | 0.58 |
| SSL (emulsifier) | 5 | 0.51 | 5 | 0.49 | 5 | 0.49 | 5 | 0.49 |
| Vital wheat gluten | 5 | 0.51 | - | - | 5 | 0.49 | 5 | 0.49 |
| Sodium bicarbonate | 5 | 0.51 | 5 | 0.49 | - | - | 5 | 0.49 |
| Vanilla flavour 10299 | 2 | 0.20 | 2 | 0.20 | 2 | 0.20 | 2 | 0.19 |
| Sweetlite Boost | 2 | 0.20 | 2 | 0.20 | 2 | 0.20 | 2 | 0.19 |
| DATEM (emulsifier) | 1 | 0.10 | 1 | 0.20 | 1 | 0.10 | 1 | 0.10 |
| Potato flour | - | - | 32 | 3.13 | 32 | 3.15 | 32 | 3.11 |
| Soya flour | - | - | 12 | 1.17 | 12 | 1.18 | 12 | 1.17 |

Bakers white flour is a commonly available wheat flour having a protein content of 12%. A commercially available product is Heygates^{™} Bakers Green Flour.
Monolux: mono- and digylcerides of fatty acids
HPMC: hydroxypropyl methylcellulose
SSL: sodium stearoyl lactylate
DATEM: diacetyl tartaric acid ester of mono- and diglycerides
SAPP 28: sodium acid pyrophosphate (leavening agent)
Sweetlite Boost: a flavouring additive

In each of the examples above, 600g of the dry mix was then mixed into a dough using a Kemper 50kg Spiral mixer. The dough was mixed at 110rpm for 2 minutes and then the speed increased to 220 rpm for a further 5 minutes. The doughs were produced according to the proportions shown in Table 3 below.

**Table 3**

| | Ex. 1 | | Ex. 2A, 2B, 2C /g | | Ex 2D /g | | Ex. 3 /g | |
|---|---|---|---|---|---|---|---|---|
| | /g | % | /g | % | /g | % | /g | % |
| Dry mix | 600 | 59.67 | 600 | 54.61 | 600 | 61.31 | 600 | 54.61 |
| Oil | 24 | 2.39 | 24 | 2.18 | 24 | 2.45 | 24 | 2.18 |
| Dry yeast | 21.6 | 2.15 | 21.6 | 1.97 | 21.6 | 2.21 | 21.6 | 1.97 |
| Water | 240 | 23.86 | 333 | 30.31 | 333 | 34 | 333 | 30.31 |
| Scrap dough | 120 | 11.93 | 120 | 10.92 | - | - | 120 | 10.92 |
| Total weight | 1005.6 | | 1098.6 | | 978.6 | | 1098.6 | |
| Water content | 23.9% | | 30.3% | | 34% | | 30.3% | |

Examples 1 and 3 were found to have the ideal dough consistency.

Example 2A formed a dough, but was significantly wetter and sticker than any of Examples 1, 2B, 2C or 3. Example 2 could not hold its shape and did not rise evenly once proofed. The dough was also found to stick to the machinery used during production of the doughnut, which is undesirable. Without wishing to be bound by theory, it is understood that the additional starch content in Examples 2B, 2C and 3 very effectively compensated the significantly increased water content. This shows that the water content can be increased without negatively affecting the dough workability or the production process.

Example 2B formed a functional dough but was observed to rise less during the proofing and the steaming steps described below. The end product was less soft than the product formed using the dough of Example 3.

Example 2C formed a functional dough and was found to still rise during proofing and cooking. However, the final product was found to be less fluffy and had a denser structure than products formed from the dough of Example 3.

Examples 2A-C and 3, in addition to the increased weight due to increased water content, had a sugar content which was only two thirds of the conventional product of Example 1.

Example 2D formed a functional dough but was found to form a tougher and firmer product once cooked.

### Experiment 2 - Cooking process

A series of doughs were prepared according to Example 3. They were each formed into a doughnut shape and proofed until risen. They were then cooked in a steam oven at the temperatures in Table 4, with a 100% relative humidity and fan circulation for a duration of 7 minutes. The steamed products were assessed and results noted in Table 4 below.

**Table 4**

| | **Example 4** | **Example 5** | **Example 6** | **Example 7** |
|---|---|---|---|---|
| **Temperature** | 50°C | 100°C | 150°C | 200°C |
| **Observations** | Starch failed to effectively gelatinize. Dough is "wet" to touch. | Starch gelatinizes through to centre. Outside surface remains soft and damp. | Starch gelatinizes through to centre with dehydration of thin layer of the surface. | Starch gelatinizes through to centre. Product thickens and cooks forming bread-like crust. |

The above results show that high and low temperatures did not produce viable products. Examples 5 and 6 were selected for further cooking. The products were each flash fried according to the process in Table 5 below. The fried products were assessed and results noted in Table 5.

**Table 5**

| | **Example 5A** | **Example 5B** | **Example 6A** | **Example 6B** |
|---|---|---|---|---|
| **Temperature** | 175°C | 185°C | 185°C | 185°C |
| **Time** | 30 second per side | 20 seconds per side | 10 seconds per side | 30 seconds per side |
| **Observations** | Product was an appealing brown colour, but had a long contact with oil | Product achieves appealing brown colour with shorter contact time with oil | Product browns to the correct degree with the shorted oil contact time | Product was overly browned with an off flavour |

The above results show that the correct level of surface colouration can be achieved with only 20 seconds total frying time (i.e. 10 seconds per side). Longer cooking times lead to overcooking and undesirable flavours (example 6B). A higher temperature of 185°C lead to better results - although at 175°C the browning was desirable, the longer cooking time was understood to cause greater fat uptake into the product.

The inventors have found that the cooking process can thus be adjusted in order to provide a product with desired characteristics. Increasing the frying time and decreasing the surface moisture of the doughnut by steaming the dough at higher temperatures lead to greater browning of the surface of the product. Thus, by tweaking the cooking conditions, the final product can be made to a range of browning levels.

### Experiment 3 - Fat content

The dough of Example 1 was shaped into a doughnut shape and proofed until risen. It was then deep fried for 60 seconds per side, removed from the fryer and allowed to drain. A second doughnut according to Example 6A was prepared and, once cooked, allowed to cool. Once the two doughnuts had cooled, they were tested to determine its total fat content, and the result listed in Table 6 below.

**Table 6**

| | **Example 1** | **Example 6A** |
|---|---|---|
| Dry mix | Example 1 | Example 3 |
| Steaming | None | 150°C for 7 minutes, 100% humidity |
| Frying | 60 seconds per side | 10 seconds per side |
| Total fat content | 23.5 g/100g | 8.6 g/100g |

The doughnut according to Example 6A was thus found to have a significantly reduced fat content compared to the conventional recipe of Example 1. Without wishing to be bound by theory, it is understood that the improved performance is due to one or more of the reduced frying time, the inhibition of oil uptake by the dough and the increased water content of the dough.

It was found that the confectionery product produced according to Example 6A tasted as good as the conventional recipe of Example 1. Without wishing to be bound by theory, it is believed that the reduced frying time and oil penetration results in lower fat content in the interior of the doughnut, but with still pleasing levels of fat at the surface. Similarly, the use of dextrose leads to greater browning of the sugar during the frying step, thus achieving a good surface caramelisation with a reduced sugar content. The reduced fat and sugar content is thus compensated for by concentrating the fat and sugar onto the surface of the product i.e. this positioning of the fat and sugar content delivers the pleasing mouthfeel and taste to the consumer, who is unable to detect the lower overall content.

### Experiment 4 - Cooking process

A series of doughs were prepared according to Example 3. They were each formed into a doughnut shape and proofed until risen. They were then cooked in a dry and steam oven at the various settings in Table 7. The partially cooked products were then flash-fried for 15sec on one side. Oil uptake data were recorded and presented on the Table 8 below.

**Table 7**

| | **Settings** | **Example 7** | **Example 8** | **Example 9** | **Example 104** | **Example 11** | **Example 12** |
|---|---|---|---|---|---|---|---|
| Stage 1 | RH (%) | 0 | 0 | 0 | 20 | 0 | 50 |
| | Duration (min) | 4 | 3 | 2.5 | 2.5 | 1.5 | 5 |
| | Temperature (°C) | 90 | 90 | 100 | 100 | 100 | 100 |
| | Fan speed | 3 | 3 | 3 | 3 | 3 | 3 |
| Stage 2 | RH(%) | 100 | 100 | 100 | 100 | 20 | 100 |
| | Duration (min) | 3 | 3 | 2 | 2 | 2.5 | 1 |
| | Temperature (°C) | 105 | 105 | 105 | 100 | 100 | 100 |
| | Fan speed | 3 | 3 | 3 | 3 | 3 | 3 |
| Stage 3 | RH (%) | - | - | - | - | 100 | - |
| | Duration (min) | - | - | - | - | 2 | - |
| | Temperature (°C) | - | - | - | - | 105 | - |
| | Fan speed | - | - | - | - | 3 | - |

| | | | | | | | |
|---|---|---|---|---|---|---|---|
| RH = Relative Humidity | | | | | | | |

**Table 8**

| **Results** | **Example 7** | **Example 8** | **Example 9** | **Example 10** | **Example 11** | **Example 12** |
|---|---|---|---|---|---|---|
| **Oil Uptake (g)** | 2.14 | 1.45 | 2.43 | 1.48 | 1.5 | 1.05 |
| **Final Product** | Good product, but some fine cracks on the surface observed | Good Product | Product lower in height comparing to Example 5 | Product lower in height comparing to Example 5 | Optimum Product. | Flat product, not positive eat. |

The above results show that controlling the baking settings (temperature, time and moisture) offer a significant impact in product specification and oil uptake. Oil uptake is directly correlated with nutritional profile of product, such as saturated fat and calorie content per 100g. without wishing to be bound by theory, it is believed that dry cooking in a first stage allows optimum product rise and spread while a dry crust is formed that supports the oil uptake control. Applying subsequent wet heat along with raised temperature in a second stage, leads to the starch gelatinisation and enzyme deactivation taking place, while the product skin is moistened. The product is protected from uncontrolled cracks and other surface defects that would lead to uncontrolled oil uptake during flash-frying. Applying an intermediate stage with 20% moisture as in Example 11 supports further the mechanism explained above but it increases the complexity in a commercial stage. Example 8 and Example 11 demonstrate optimum results in product appearance, specification and oil uptake in flash-frying stage.

## Claims

1. A dough for a confectionery product comprising:
50-70 wt% dry ingredient mix;
25-35 wt% water;
0-5 wt% oil; and
0-5 wt% yeast;
wherein the dry ingredient mix comprises wheat flour having a protein content of 11-13%.

2. The dough according to claim 1, wherein the dry ingredient mix further comprises up to 1 wt% of vital wheat gluten.

3. The dough according to either preceding claim, wherein the dry ingredient mix further comprises up to 5 wt% of an alternative starch source, and optionally, wherein the alternative starch source comprises potato flour, potato flakes, and/or soya flour.

4. The dough according to any one of the preceding claims, further comprising up to 3 wt% of chemical leavening agent comprising one or more of baking powder, bicarbonate of soda, potassium bicarbonate, monocalcium phosphate, and SAPP 28.

5. The dough according to any one of the preceding claims, further comprising up to 5 wt% of emulsifier, and optionally, wherein the emulsifier comprises a fat-based emulsifier, and optionally, wherein the emulsifier comprises one or more of: DATEM, SSL, mono- and diglycerides of fatty acids, glycerol monostearate, CITREM, LACTEM, and lecithin.

6. The dough according to any one of the preceding claims, further comprising up to 1 wt% of an enzyme mix, and optionally, wherein the enzyme mix comprises one or more of: amylase and lipase.

7. The dough according to any one of the preceding claims, further comprising up to 2 wt% of a film-forming ingredient, and optionally, wherein the film-forming ingredient comprises one or more of methyl cellulose, carboxymethyl cellulose, and hydroxypropyl methylcellulose.

8. The dough according to any one of the preceding claims, further comprising up to 30 wt% of dough from a previous batch.

9. A confectionery product comprising a dough according to any one of the preceding claims.

10. A method for making a confectionery product, comprising:
making a dough according to any one of claims 1 to 9;
forming the dough into a desired shape;
partially cooking the dough to form a partially cooked intermediate; and
flash-frying the partially cooked intermediate to produce the confectionery product.

11. The method according to claim 10, wherein forming the dough comprises forming balls or rings of dough via one or more of extrusion, deposition, or cutting and rolling the dough, and optionally, proofing the dough.

12. The method according to claim 10 or 11, wherein partially cooking the dough comprises cooking the dough in steam at 90°C to 175°C and 20-100% relative humidity for up to 10 minutes.

13. The method according to any one of claims 10 to 12, wherein partially cooking the dough comprises cooking the dough until the centre of the product reaches at least 80°C.

14. The method according to any one of claims 10 to 13, wherein flash-frying the steamed intermediate comprises frying at 160-200°C for up to 40 seconds.

15. The method according to any one of claims 10 to 14, wherein making the dough further comprises adding fermented/proofed dough from a previous batch into the dough mixture.
